# EUROPEAN PATENT APPLICATION

(11) **EP 1 683 718 A1**
(43) Date of publication of application: **26.07.2006**
(21) Application number: 04714809.3
(22) Date of filing: 26.02.2004
(51) Int. Cl.: B63B 25/08, B63B 3/13

(54) **SYSTEM FOR BALANCING FORCES ACTING ON A HERMETICALLY-SEALED CONTAINER SHIP WHICH IS SINKING IN A LIQUID**

(30) Priority: 27.02.2003 ES 200300479
(71) Applicant: Borras Llompart, Ignacio, 07470 Puerto de Pollensa, Baleares (ES)
(72) Inventor: The designation of the inventor has not yet been filed
(74) Representative: Carpintero Lopez, Francisco
(86) International application number: PCT/ES2004/000094
(87) International publication number: WO 2004/076275

(57) **Abstract**

The present invention concerns those elements that, by means of valves, allow the balance of forces acting upon the walls of a hermetic container during its sinking in a liquid, thus preventing the stress produced due to the effect from an increased volume of liquid applied on the external face of the container. It also prevents spillage of the content into the surrounding environment through the said elements and is provided with the means to equally balance the forces cited during eventual re-floatation of the aforementioned container.

## Description

The present invention concerns those elements that allow the balance of forces acting upon the walls of a hermetic container during its sinking in a liquid, thus preventing the stress they produce due to the increment of the column of liquid applied to the outside face. It also prevents spillage of the content into the surrounding environment through the said elements and is fitted with the means to equally balance the forces cited during the eventual re-floatation of the above-mentioned container. All this signifies a considerable increase in safety when transporting dangerous goods by sea.

Preliminary investigation has not determined the existence of any mechanism similar to the one proposed in the present invention.

The present invention concerns the creation of a recipient container and one or more vertical pipes that penetrating its top deck and connect with the outside. These are arranged so that the lower opening is located near the bottom of the container, whereas the upper opening is at the exact height over the already mentioned deck. A retaining valve is fitted at this end that only allows the passage from an outward to an inward direction and is equipped with a mechanism that measures the opening until the whole assembly is situated at the required depth. This valve includes the necessary means so that it can also open at discretion.

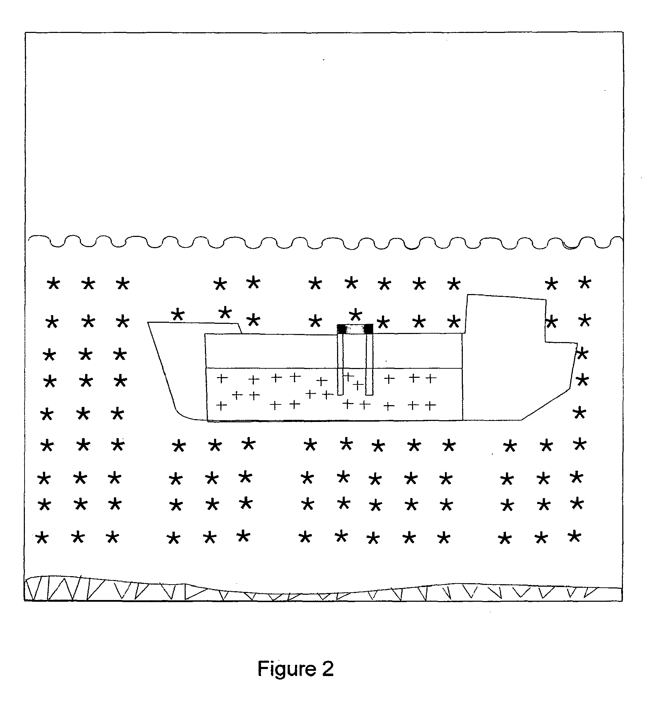

These and other features of the present invention can be understood more easily from the following description by going through a practical example of how it works; this description is based on the attached drawing in which:

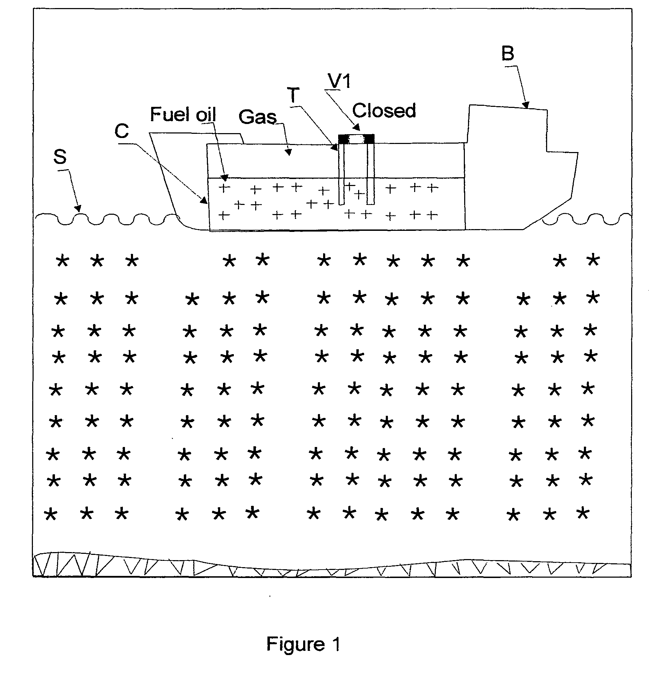

Figure 1 represents a section of an oil tanker (B) underway, in which:
   C- Hermetic container
   T- Pipe
   V- Valve
   S- Sea water surface
Figure 2 represents the same vessel (B) during its initial phase of sinking, without having reached the depth for the automatic opening of the valve (V).

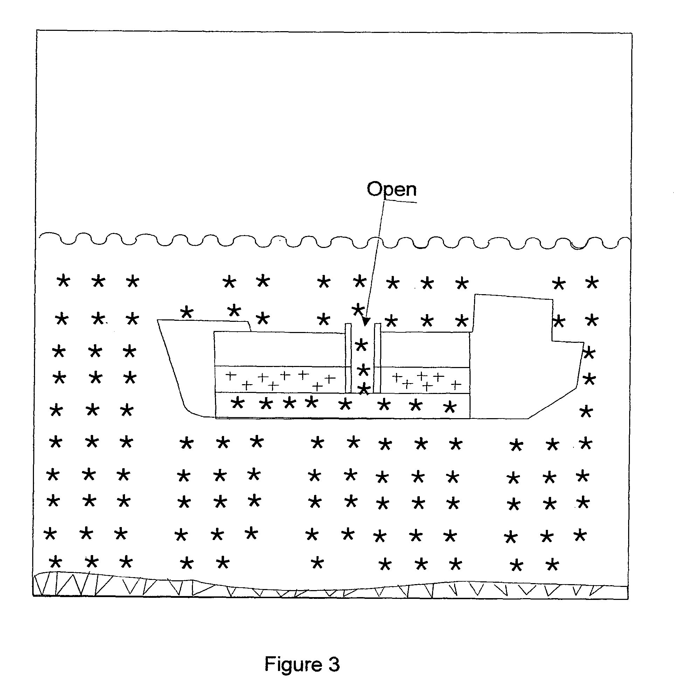

Figure 3 represents the same vessel (B) during sinking, with the valve (V) in an open position and the sea water flooding the container (C).

Let us presume a case study in which an oil tanker (B) that is sea sailing (S) and it has a hermetic container (C) for transporting fuel oil and it is full of this. Equally, the above-mentioned container (C) is fitted with a pipe (T) that penetrates the upper deck and connects with the outside. On the upper opening, it is equipped with a retaining valve (V) which only allows the passage from an outward to an inward direction; this opens when the pressure exerted by the exterior medium on its upper face exceeds a specific value; the valve (V) is liable of being voluntarily forced to open.

In the above-mentioned circumstances, the vessel begins to sink, and therefore the pressure exerted on it by the column of water covering it increases as it submerges, whereas the pressure remains constant on the inside. Due to the effect of the gas chamber, it creates a difference between the forces applied on the internal and external faces of its lining.

If immersion was deeper, the above-mentioned acting forces might cause structural collapse of the container (C), and therefore spillage of its content into the sea, if it were not for the fact that, on reaching an established safety depth, the valve (V) opens, letting the sea water pass through the pipe (T) towards the inside of the container (C), which it progressively floods, reducing the gas space and increasing the internal pressure until reaching the closing value of the aforementioned valve (V). Thus the difference between the forces applied on both faces of the lining are never sufficient to break them, however deep it might sink.

The increased opening value of the valve (V) is needed to ensure the circulatory direction of the liquid, which, due to the different pressure between the internal and external environments, will always be suitable. In addition the accidental entry of seawater or other substances into the container (C) caused by other factors that occur during everyday surface use is also prevented. In the event that the sunken vessel is re-floated, the possibility of voluntarily forcing the valve (V) open allows the release of the excess fluid housed in the container (C) due to the expansion effect of the gas chamber as the environmental pressure is reduced during re-floatation, thus avoiding the aforementioned damaging effects and that would be produced because of excess internal pressure applied on the container walls (C).

We do not believe it necessary to extend further on explaining this invention, as any expert on this subject can understand its scope and the advantages arising from it.

The terms upon which the present report has been written must always be taken in the widest possible and not limitative sense.

The materials, shape and disposition of the elements shall be susceptible to variation, whenever this does not entail altering the essential characteristics of the invention as claimed below.

## Claims

1. Balance of forces system acting upon a hermetic container during its sinking in a liquid that is **characterized** for its one or more pipes (T) that penetrate its upper deck and which are fitted with valves (V) on the upper ends.

2. Balance of forces system acting upon a hermetic container during its sinking in a liquid that is **characterized**, as per the above claim, because the valves (V) are arranged so that they only allow passage from an outward to an inward direction to the container (C).

3. Balance of forces system acting upon a hermetic container during its sinking in a liquid that is **characterized**, as per the first claim, because the valves (V) open automatically when a specific depth is reached, thus allowing the liquid load inside the container (C) to balance the forces applied on the walls and guaranteeing the circulatory direction of the liquid, therefore preventing the substances coming from inside the container (C) to be spilled into its surrounding environment.

4. Balance of forces system acting upon a hermetic container during its sinking in a liquid, that is **characterized**, as per the first claim, because the valves (V) can be forced to adopt the opening position at will to prevent the over-expansion of gas possibly present within the container (C) during the eventual re-floatation of same to the sea surface.
